# EUROPEAN PATENT APPLICATION

(11) **EP 2 262 167 A1**
(43) Date of publication of application: **15.12.2010**
(21) Application number: 09745388.0
(22) Date of filing: 16.04.2009
(51) Int. Cl.: H04L 12/18

(54) **METHOD, DEVICE AND SYSTEM FOR REALIZING THE ELECTRONIC WHITEBOARD IN AN AUDIO/VIDEO CONFERENCE**

(30) Priority: 14.05.2008 CN 200810094738
(71) Applicant: Huawei Technologies Co., Ltd., Longgang District, Shenzhen Guangdong 518129 (CN)
(72) Inventor: ZHA, Feng, Shenzhen 518129 (CN)
(74) Representative: Kreuz, Georg Maria
(86) International application number: PCT/CN2009/071299
(87) International publication number: WO 2009/138004

(57) **Abstract**

A method, a device, and a system for implementing an electronic whiteboard in an audio/video conference are provided. The method includes the following steps. An electronic whiteboard is created. A first extended message is sent to a first user equipment (UE) and a second UE in a Session Initiation Protocol (SIP) audio/video conference, so as to instruct the first UE and the second UE to initialize the electronic whiteboard. A second extended message containing an operation instruction of the electronic whiteboard sent by the first UE is received. The second extended SIP INFO message is sent to the second UE. Thus, a function of the electronic whiteboard is integrated in an SIP audio/video conference.

## Description

The application claims the benefit of priority to China Patent Application No. 200810094738.3, filed on May 14, 2008, entitled "METHOD, DEVICE, AND SYSTEM FOR IMPLEMENTING ELECTRONIC WHITEBOARD IN AUDIO/VIDEO CONFERENCE", which is incorporated herein by reference in its entirety.

### FIELD OF THE TECHNOLOGY

The present invention relates to the field of communication technology, and more particularly to a method, a device, and a system for implementing an electronic whiteboard in an audio/video conference.

### BACKGROUND OF THE INVENTION

Currently, a conference system is developing in an all-media orientation, which requires support to various multimedia services such as text, images, audio, and video. Thus, a multimedia conference technology emerges in the Next Generation Network (NGN) and the Internet Protocol (IP) Multimedia Subsystem (IMS).

In a multimedia conference in the NGN and IMS environment, a user demands more human-based functions, in which the electronic whiteboard function is the most desired. The electronic whiteboard is a technology that utilizes a computer to simulate a normal whiteboard, so that a plurality of users works together in an electronic document through a network. The shared document is displayed on screens of all users at the same time so that it looks like the users are using a conventional whiteboard at the same time. The whiteboard is a tool in cooperative applications supported by computers.

Currently the electronic whiteboard is mainly based on the Transmission Control Protocol/Internet Protocol (TCP/IP). However, during the development of the present invention, the inventor finds that the TCP/IP is not extended to other protocols, for example, the Session Initiation Protocol (SIP), so that the TCP/IP cannot be directly used to develop the multimedia conference, and other protocols must be used to combine a conference, which is so complicated that the process needs to be coordinated by applications.

### SUMMARY OF THE INVENTION

Accordingly, the present invention is directed to a method, a device, and a system for implementing an electronic whiteboard in an audio/video conference, so as to implement the electronic whiteboard in an SIP audio/video conference.

Thus, the present invention provides the following technical solutions.

The present invention provides a method for implementing an electronic whiteboard in an audio/video conference, which includes: creating an electronic whiteboard, and sending a first extended message to a first user equipment (UE) and a second UE in an SIP audio/video conference, so as to instruct the first UE and second UE to initialize the electronic whiteboard; receiving a second extended message containing an operation instruction of the electronic whiteboard sent by the first UE; and sending the second extended message to the second UE.

The present invention provides a device for implementing an electronic whiteboard in an audio/video conference, which includes a whiteboard creating unit, a first message unit, and a second message unit. The whiteboard creating unit is adapted to create an electronic whiteboard. The first message unit is adapted to send a first extended message to a first UE and a second UE in an SIP audio/video conference system, so as to instruct the first UE and the second UE to initialize the electronic whiteboard. The second message unit is adapted to receive a second extended message containing an operation instruction of the electronic whiteboard from the first UE, and send the second extended message to the second UE.

The present invention provides a device for implementing an electronic whiteboard in an audio/video conference, which includes a whiteboard initialization unit and a message construction unit. The whiteboard initialization unit is adapted to initialize the electronic whiteboard according to a first extended message sent by an SIP server. The message construction unit is adapted to construct a second extended message from an operation instruction input from the electronic whiteboard by a user, and send the second extended message to a UE in the SIP audio/video conference through the SIP server.

The present invention provides a system for implementing an electronic whiteboard in an audio/video conference, which includes an SIP server connected to a first UE and a second UE. The SIP server is adapted to create an electronic whiteboard, and send a first extended message to the first UE and the second UE in an SIP audio/video conference system, so as to instruct the first UE and the second UE to initialize the electronic whiteboard. The SIP server is further adapted to receive a second extended message containing an operation instruction of the electronic whiteboard from the first UE, and send the second extended message to the second UE. The first UE and the second UE are adapted to initialize the electronic whiteboard according to the first extended message sent by the SIP server. The first UE is adapted to construct the second extended message from an operation instruction input from the electronic whiteboard by a user, and send the second extended message to the second UE through the SIP server. The second UE is adapted to receive the second extended message sent by the SIP server, and parse and display the operation instruction in the second extended message.

Therefore, in the embodiments of the present invention, on the basis of the process of the SIP audio/video conference, through the extended SIP INFO message, the whiteboard operation instruction is carried between the UEs and an SIP application server (AS), so as to integrate the electronic whiteboard function in the SIP audio/video conference, thus greatly enriching the content of the SIP audio/video conference and satisfying the demands of users.

### BRIEF DESCRIPTION OF THE DRAWINGS

FIG. 1 is a schematic view of the architecture of an electronic whiteboard system according to an embodiment of the present invention;
FIG. 2 is a schematic view of the architecture of an SIP audio/video conference system according to an embodiment of the present invention;
FIG. 3 is a flow chart of implementing an SIP audio/video conference according to an embodiment of the present invention;
FIG. 4 is a flow chart of a method for implementing an electronic whiteboard in an audio/video conference according to an embodiment of the present invention;
FIG. 5 is a flow chart of a method for implementing an electronic whiteboard in an audio/video conference according to an embodiment of the present invention;
FIG. 6 is a schematic structural view of an SIP AS for implementing an electronic whiteboard in an audio/video conference according to an embodiment of the present invention;
FIG. 7 is a schematic structural view of a UE for implementing an electronic whiteboard in an audio/video conference according to an embodiment of the present invention; and
FIG. 8 is a schematic structural view of a system for implementing an electronic whiteboard in an audio/video conference according to an embodiment of the present invention.

### DETAILED DESCRIPTION OF THE EMBODIMENTS

In the embodiments of the present invention, in the calling of a conventional Session Initiation Protocol (SIP) audio/video conference, an interactive function of an electronic whiteboard is implemented through extension of an SIP message body and SIP signaling.

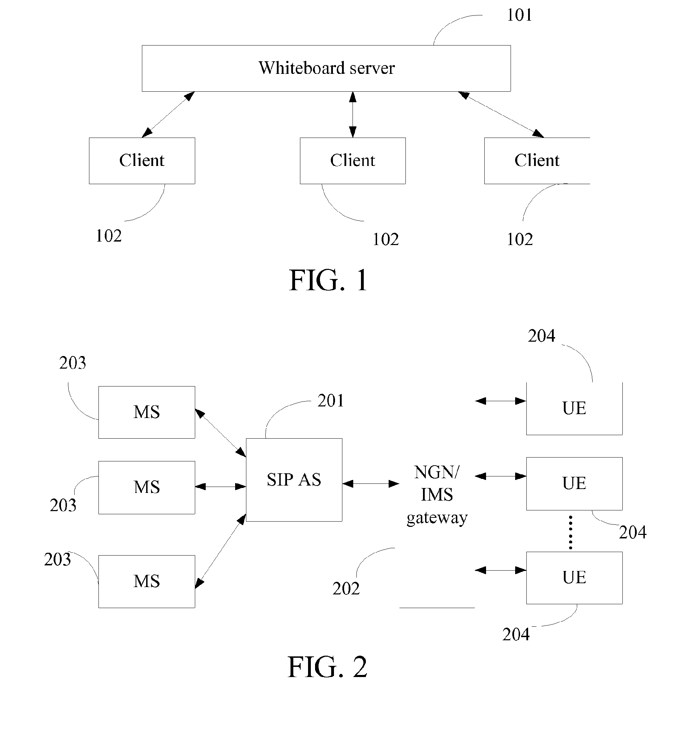

Referring to FIG. 1, an electronic whiteboard system includes a whiteboard server 101 and a plurality of clients 102. The whiteboard server 101 is adapted to perform login and logout management, authorization management, reception of drawings, and text and graphic sharing of users. The whiteboard server 101 establishes a synchronization and consistency mechanism, records and broadcasts messages, and at the same time monitors network connection requests of specific ports of the clients 102 and establishes connection to the ports. Therefore, the data of a client 102 can be sent to the whiteboard server 101 and then forwarded to other clients 102 by the whiteboard server 101. The client 102 receives input of the user, packages various operations into a message, sends the message to the whiteboard server 101, and receives a return message from the whiteboard server 101, and changes of the shared whiteboard are shown on the client 102. Each client 102 is in communication with only the whiteboard server 101, but is not directly connected to other clients 102.

FIG. 2 is a schematic view of the architecture of an SIP audio/video conference system integrating an electronic whiteboard function. The system includes an SIP application server (AS) 201, an NGN/IMS gateway 202, one or more media servers (MSs) 203, and a plurality of UEs 204.

The function of each component in the SIP audio/video conference system is illustrated as follows.

The SIP AS 201 controls calling of the MS 203 and UEs 204, implements logic control, and performs functions of conference logic and construction of conference signaling. In addition, the SIP AS 201 needs to distribute and maintain resources for the MS 203. In the embodiment of the present invention, the SIP AS 201 not only controls calling of a conference and the conference, but also controls establishment and logic of the electronic whiteboard.

The NGN/IMS gateway 202 is a call control center of the system, which is in charge of protocol adaptation, call processing, resource management, and service proxy. At the same time, the NGN/IMS gateway 202 serves as an external interface of the system to accomplish interconnection and interworking functions with other systems.

The MS 203 supports audio playback and audio/video conference functions.

The UE 204 has audio and video capture and playback capabilities. In the embodiment of the present invention, the UE 204 implements the functions of the client 102, that is, the functions of drawing and displaying of the electronic whiteboard.

The process of the SIP audio/video conference includes session establishment and conference control. In the session establishment, a resource port is created on the MS 203 for each UE 204 in the conference. In the conference control, a logic conference is established on the MS 203, the ports corresponding to the UEs 204 in the conference are added in the logic conference, and the image and sound thereof are controlled.

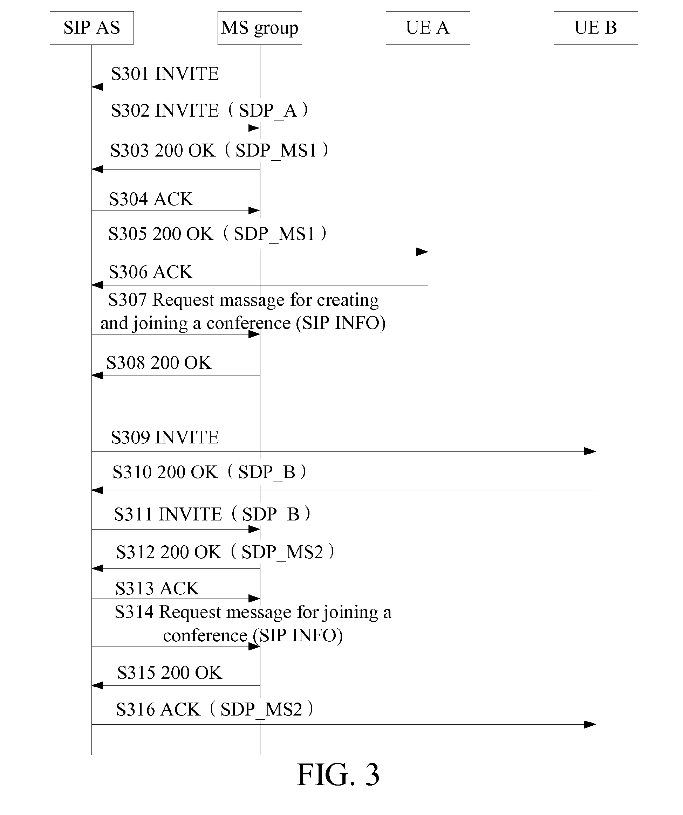

FIG. 3 is a flow chart of implementing an SIP audio/video conference, which includes the following steps.

In Step S301, UE A sends an INVITE message to an SIP AS.

The UE is in communication with the SIP AS through the NGN/IMS gateway. Here, the description about the forwarding process of the NGN/IMS gateway is omitted.

In Step S302, the SIP AS sends an INVITE message containing a Session Description Protocol (SDP) identifier SDP_A of the UE A to an MS1, so as to request to create a conference port for the UE_A.

Note: IN FIG. 3, the MS group includes a plurality of MSs: MS1, MS2, ..., and MSn.

In Step S303, the MS1 returns a 200 OK message indicating that the conference resource is successfully created to the SIP AS. The 200 OK message contains an SDP identifier SDP_MS1 of the MS 1. The SDP_MS1 indicates that the 200 OK message is returned from the MS 1.

In Step S304, the SIP AS returns an acknowledgement (ACK) message to the MS1.

In Step S305, the SIP AS returns a 200 OK message containing the SDP_MS1 to the UE A.

In Step S306, the UE A returns an ACK to the SIP AS.

Thus, the process of session establishment is completed.

In Step S307, the SIP AS sends a request message for creating and joining a conference (SIP INFO message) to the MS 1.

In Step S308, the MS1 returns a 200 OK to the SIP AS, indicating that the conference is successfully created.

Through Steps S301 to S308, the UE A joins the conference.

The joining process ofUE B is implemented through the following steps.

In Step S309, the SIP AS sends an INVITE message to UE B.

In Step S310, the UE B returns a 200 OK message containing an SDP_B to the SIP AS.

In Step S311, the SIP AS sends an INVITE message containing the SDP_B to an MS2, so as to request to create a conference port.

In Step S312, the MS2 returns a 200 OK message containing an SDP_MS2 to the SIP AS.

In Step S313, the SIP AS returns an ACK message to the MS2.

In Step S314, the SIP AS sends SIP INFO to the MS2, so as to request to join the established conference.

In Step S315, the MS2 returns a 200 OK to the SIP AS, indicating that the conference is successfully created.

In Step S316, the SIP AS returns an ACK message containing the SDP_MS2 to the UE B.

The INVITE, SIP INFO, and 200 OK messages are messages in the standard SIP protocols.

Only two UEs are used for illustration here. The conference joining process of other UEs such as UE C is similar to that of the UE B, and the description is omitted here.

The method in the embodiment of the present invention is based on the original SIP audio/video conference process, and further includes the establishment and logic control process of the electronic whiteboard, so as to implement the electronic whiteboard function in an SIP audio/video conference.

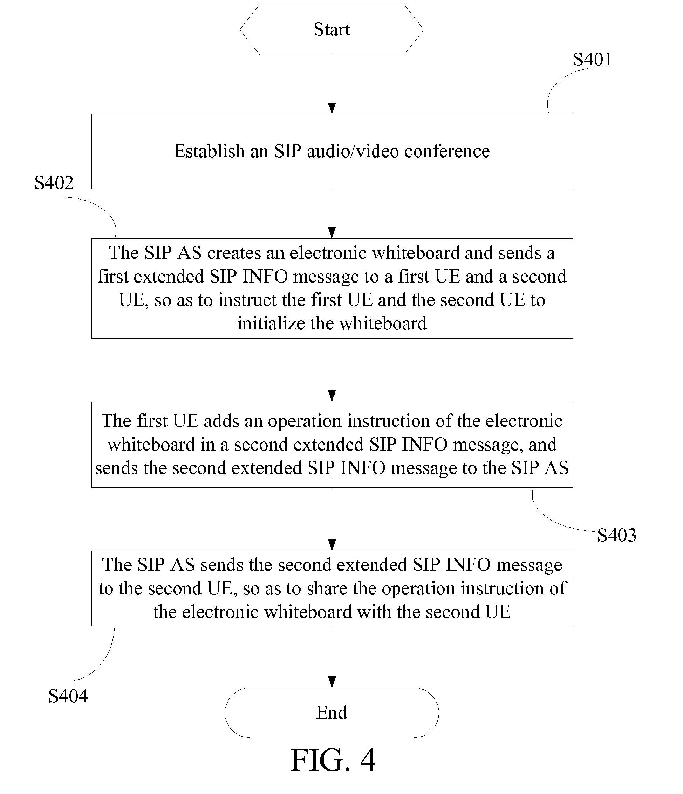

FIG. 4 is a flow chart of a method according to an embodiment of the present invention. The method includes the following steps.

In Step S401, an SIP audio/video conference is established.

The specific implementation of S401 is as shown in FIG. 3 and the description of FIG. 3.

In Step S402, the SIP AS creates an electronic whiteboard and sends a first extended SIP INFO message to a first UE and a second UE in the SIP audio/video conference, so as to instruct the first UE and second UE to initialize the whiteboard.

In Step S403, the first UE adds an operation instruction of the electronic whiteboard in a second extended SIP INFO message, and sends the second extended SIP INFO message to the SIP AS.

In Step S404, the SIP AS sends the second extended SIP INFO message to the second UE, so as to share the operation instruction of the electronic whiteboard with the second UE.

Only two UEs are used for illustration here. The implementation of the electronic whiteboard function for more UEs is similar to the above description. For example, in order to implement the electronic whiteboard function among three UEs, the first extended SIP INFO message needs to be sent to a third UE in Step S402, and the SIP AS further sends the second extended SIP INFO message to the third UE in Step S404.

It should be noted that each extended SIP INFO message in the embodiments of the present invention is mainly to be distinguished from the SIP INFO message in an SIP audio/video conference in the prior art. In fact, the format of the extended SIP INFO message can be similar to the SIP standard protocol. The electronic whiteboard function can be carried by adding or changing some fields.

The implementation process of the electronic whiteboard described in FIG. 4 is initiated by different application software, for example, the electronic whiteboard function initiated by the Web application software through the SIP AS. In this situation, the electronic whiteboard function is automatically integrated in the SIP audio/video conference, so as to provide more functions for the users.

In addition, the electronic whiteboard can also be initiated by a UE. In this situation, if a certain UE intends to implement the electronic whiteboard function with other UEs, the UE sends a request for creating whiteboard to the SIP AS at first, indicating that the whiteboard sharing application needs to be created, and Steps S402 to S403 are performed subsequently. The mode of implementing the electronic whiteboard function in the SIP audio/video conference only when the UE initiates the request can be achieved according to demands of the user. When the user does not need the function, signaling overhead of the SIP audio/video conference system can be saved to some extent.

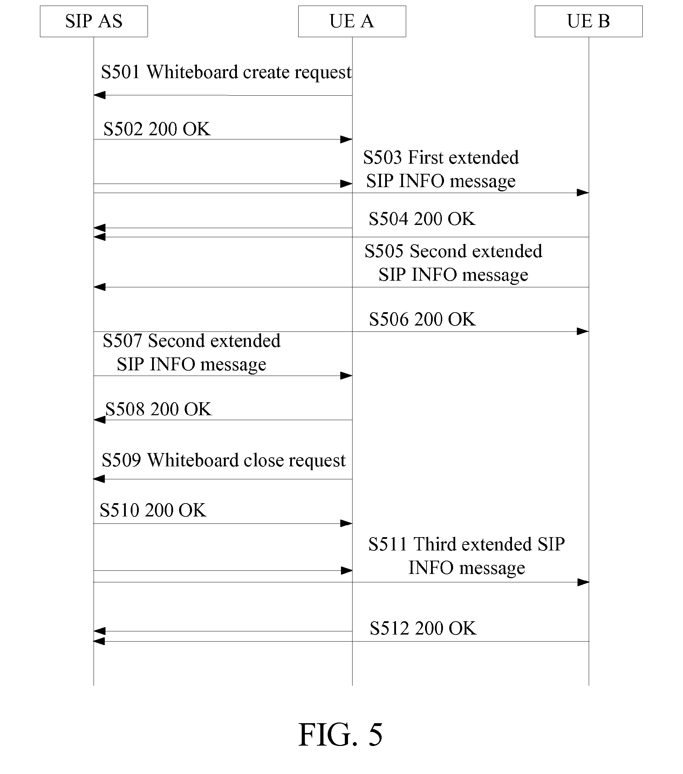

FIG. 5 is a flow chart of implementing an electronic whiteboard in an SIP audio/video conference initiated by a UE according to an embodiment.

Before the process shown in FIG. 5, it is assumed that the SIP audio/video conference is already established. The specific implementation process is as shown in FIG. 3 and the description of FIG. 3.

The process in FIG. 5 includes the following steps.

In Step S501, the UE1 sends a request for creating whiteboard to the SIP AS, indicating that a shared whiteboard needs to be created among the UEs.

The request for creating whiteboard can be carried in an SIP INFO message. The SIP INFO message carrying the request for creating whiteboard is an extended SIP INFO message.

It should be noted that the whiteboard system supports cooperative work of multiple users, in which multiple UEs may operate concurrently. In addition, shared information is transmitted through a network among multiple devices. Due to network delay and unreliability in transmission, as well as human reasons in the cooperation of multiple UEs, new features appear in the whiteboard conflicts. Any drawing action of a cooperator is delivered as an event. The members perform corresponding drawing action after receiving the event. When a group member in a different location uses a whiteboard tool for cooperative work, interaction of operation events need to be continuously performed among the members. In order to ensure consistency of local drawing actions and display, each operation event needs to be created, locally performed, transmitted through the network, received at a different location, and executed. The "event" here means an event in the computer programming technology. The whiteboard conference supports cooperative work of multiple users and concurrent operations of multiple users definitely occur, so that the conflicts become inevitable.

In order to avoid conflicts, the following design can be used in the embodiment of the present invention. (1) Source consistency: For the drawing time of a member, the sequence of corresponding drawing actions is totally the same as the processing sequence of any receiver. That is, when the SIP AS receives a plurality of second extended SIP INFO messages sent by a plurality of UEs within a certain period, the SIP AS processes and forwards each of the second extended SIP INFO messages according to the time sequence. (2) Dependence consistency: If a certain member has a sending event n after receiving and executing an event m, for any member p, the event m is executed before the event n. That is, the priority of a response event of each UE to the SIP AS is set higher than that of the sending event of the UE. (3) Target consistency: For any two events m and n, the processing sequence of all the members is the same. That is, if a member p executes the event m before the event n, the event m is performed before the event n for any other conference member.

When a member performs drawing operations, the drawing results are not locally displayed instantly. Instead, the drawing time is packed into an Extensible Markup Language (XML) packet, which is carried in a message body of the SIP INFO and is sent to the SIP AS. The SIP AS broadcasts the drawing time to all members. After receiving the event, the member unpacks and displays the event or continues the drawing operations. As the SIP AS broadcasts the events according to a sequence of the receiving time, the events generated by the UEs are queued according to a sequence that the server receives the events. Therefore, the three consistency principles are achieved.

In Step S502, the SIP AS creates an electronic whiteboard and returns a 200 OK message to the UE 1.

The process for creating the electronic whiteboard by the SIP AS is described in the following through "settings of drawing objects for an electronic whiteboard" and "encoding of drawing objects and operations for an electronic whiteboard".

### (1) Settings of drawing objects for an electronic whiteboard.

In order to solve the problem of drawing graphics in real time for the electronic whiteboard, basic graphic drawing tools can be integrated in the SIP audio/video conference system. The basic graphics include points, lines, surfaces, and graphic texts. The lines include straight lines and free drawing lines. The surfaces include circles, ellipses, and rectangles. The assistant drawing tools include paint brushes, erasers, selection, color, and setting of paint brush modes. Through the integrated graphic drawing tools, a local graphic drawing environment is provided in the UE.

In order to solve the problems of large graphic transmission data volume and high network load, a graphic feature information capture and transmission policy based on a graphic feature notation can be used in the embodiment of the present invention. At a UE side, key feature information of a graphic is captured, and is transmitted to other UEs in the conference through an extended SIP INFO message during the conference. A receiver recovers the graphic according to the graphic feature information, so as to reduce the volume of the transmitted graphic data. For example, when a user draws a straight line, only coordinates of a starting point and an end point of the straight line and features such as width and color of the straight line are involved, and the process for drawing the straight line is not limited.

The basic operations include basic graphic operations and page management. The basic graphic operations include text editing, graphic drawing, and graphic modification. As for the page management, for example, it can be set to support 10 pages at most, and the protocol manages page addition and page turning.

The protocol of text editing includes protocol format + page + (X, Y) coordinates + font + character string. The protocol format means a protocol identifier. The page identifies a whiteboard page. The (X,Y) coordinates identify a position of the text in a window. The character string is the transmitted text.

The protocol of the drawing graphic includes protocol format + page + graphic information packet + line type, and filling information.

The content of the graphic information packet is data formed of graphic feature information generated in the graphic drawing process. The structures of the feature information data of various graphic tools defined in the system are as follows:
Straight line: starting point + end point + line width + line style + line color; and
Circle, ellipse, and rectangle: starting point + end point + line width + line style + line color + filling style + filling color. Text: coordinates + font + character size + font style + color + text content.

The protocol content and illustration of other operations are as follows:
Selection and movement: starting point + end point;
Paint brush: starting point + end point + line width + line color;
Eraser: starting point + end point coordinates + eraser size; and
Clear screen: null packet content.

### (2) Encoding of drawing objects and operations for an electronic whiteboard

All figure element of the electronic whiteboard and operations of the figure element are encoded into XML documents by the initiating UE. The XML documents are sent to the SIP AS through the extended SIP INFO. The SIP AS determines authorities of the sender UE. If the UE is a valid member in the SIP audio/video conference, the SIP AS broadcasts the extended SIP INFO to other members in the conference. Each receiver UE performs operations of unpacking and displaying images.

The request for creating whiteboard sent to the SIP AS by the UE is as follows.
<application name ="wb" action="create"><user>...</user>...< /application>,
where user is a user in the SIP audio/video conference.

The SIP AS responds to the request and creates an electronic whiteboard:
<application name ="wb" action="create" result="succ/fail" reason="... "></application>

In Step S503, the SIP AS sends a first extended SIP INFO, that is, SIP INFO_INIT, to all UEs in the SIP audio/video conference, so as to instruct the UEs to initialize the electronic whiteboard.

In Step S504, after completing initialization of the electronic whiteboard, each UE returns a 200 OK message to the SIP AS.

The SIP AS initiates a whiteboard initialization command to the UE in the sharing. For example, the content of the command may be as follows:
<application name ="wb" appid="..." action="init" cx="..." cy="..." style="..." pages="..." bgcolor="...">
</application>
where appid is an application number of the electronic whiteboard, cx is a width of the screen; and
cy is a height of the screen, style is the style, page is the number of the page, and bgcolor is the background color.

The UE returns a response as follows, for example:
<application name ="wb" appid ="..." action="init" result="..." reason="..."></ application>

If the UE does not support the whiteboard function, the UE can notify the SIP AS in a feedback.

In Step S505, when a UE inputs an operation instruction on the electronic whiteboard, the UE constructs an XML packet from the operation instruction such as a graphic, adds the XML packet in the SIP INFO message to construct a second extended SIP INFO message, and sends the second extended SIP INFO message to SIP AS. For example, when the UE2 draws a picture on the electronic whiteboard, the UE2 packs the user's operation instruction, adds the user's operation instruction in an SIP INFO message to construct a second extended SIP INFO message, and sends the second extended SIP INFO message to the SIP AS.

In Step S506, the SIP AS returns a 200 OK to the UE sending the second extended SIP INFO message.

In Step S507, the SIP AS sends the received second extended SIP INFO message to all other UEs in the SIP audio/video conference. That is, the SIP AS sends the second SIP INFO message including the operation instruction sent by the UE2 to the UE1.

In Step S508, the UE receiving the second extended SIP INFO message sent by the SIP AS returns a 200 OK to the SIP AS, that is, the UE1 returns a 200 OK to the SIP AS.

Subsequently, each UE parses the second extended SIP INFO message received from the SIP AS to obtain the XML packet, and displays the operation instruction to the user. At this time, if the UE receiving the operation instruction returns a response, the response is still displayed to other UEs through Steps S505 to S508.

An SIP audio/video conference having only two UEs is illustrated in FIG. 5. The implementation of an SIP audio/video conference having three or more UEs is similar to the foregoing, the description of which is omitted here.

The ending of the SIP audio/video conference or termination of the electronic whiteboard function for the SIP audio/video conference can be initiated by the SIP AS or by the UE. FIG. 5 shows the process that the UE1 initiates to disable the electronic whiteboard function.

In Step S509, the UE1 sends a request for closing whiteboard to the SIP AS. The request for closing whiteboard can be implemented through the extended SIP INFO message.

In Step S510, the SIP AS returns a 200 OK to the UE1.

In Step S511, the SIP AS sends a third extended SIP INFO message to each UE, so as to instruct each UE to close the electronic whiteboard.

In Step S512, each UE closes the electronic whiteboard and returns a 200 OK to the SIP AS.

In the operation of closing the electronic whiteboard initiated by the SIP AS, Steps S509 and S510 are omitted and Steps S511 to S512 are directly performed.

Examples of Steps S511 to S512 are as follows.

The SIP AS sends the third extended SIP INFO message to the UE, and the UE releases drawing board resources. For example:
<application name ="wb" appid ="..." action="close"></application>

The UE returns a response after completing the processing, for example:
<application name ="wb" appid ="..." action="close" result="succ/fail" reason="... "></application>

Therefore, based on the process of the SIP audio/video conference, the embodiment of the present invention carries shared whiteboard operation instructions between the UE and SIP AS through the extended SIP INFO messages, so as to implement the electronic whiteboard function and enriches the SIP audio/video conference functions greatly, thereby satisfying the demands of users.

Furthermore, the embodiments of the present invention may further include the following designs.

### 1. Authority control of the electronic whiteboard

The authority of the conference is controlled by the SIP AS. The authority control for the whiteboard sharing includes a free mode and a chair-control mode.

In the free mode, any member can initiate the whiteboard conference. A terminal having the whiteboard capability of any member can share the content on the whiteboard, joins cooperative creation, and displays images.

In the chair-control mode, the SIP AS can designate the authority to an initiator to initiate the whiteboard sharing. When a UE obtains the whiteboard control authority, the UE can invite other members to join the whiteboard sharing, and specify that some members have the read only authority and some members have the cooperative drawing authority.

All the instructions are encoded into an XML document, which is carried by the SIP INFO signaling and dispatched by the SIP AS.

### 2. Design for charging policy

The electronic whiteboard is limited resources. Any cooperative work action needs to occupy the network bandwidth resources and SIP AS resources. The occupied resources are much more than those occupied by a normal call. Therefore, it is necessary to perform charging control. That is, statistics results of the use of the electronic whiteboard resources of each UE are collected and used for charging. As each resource pertains to the drawing action of the whiteboard member, statistics are taken on the actions of initiating drawing or writing by each member and the received instructions of drawing and writing actions. The statistics are used as a charge rate for charging.

### 3. Design for flow control

In the SIP audio/video conference system that implements the electronic whiteboard, in addition to data information, various control information is also transmitted between the UE and the SIP AS. When the group members work cooperatively, the system might generate a great amount of information instantly to cause network congestion. Therefore, it is necessary to perform effective control on the large amount of information transmitted between the UE and the SIP AS.

### (1) Action synchronization

Each action of the UE in the shared space is broadcast to other UE in real time.

### (2) Use status synchronization

A buffer area is set for each UE. The local operation is first stored in the buffer area. When the data in the buffer area reaches a certain amount, the data is then sent at a time. The size of the buffer pool is set by the UE. For example, the situation that the UE draws curves is set, so that graphic feature sampling is performed when one point or multiple points are slid, so as to reduce the curve complexity and reduce the operations to lower the flow.

### 4. Electronic whiteboard reconstruction

When a new UE joins an existing whiteboard conference, the existing content of the whiteboard needs to be drawn again on the drawing board of the member. The SIP AS establishes two buffers for each whiteboard conference: one is a buffer queue of performed drawing operations and the other one is a buffer queue of drawing operations to be performed. When a new member joins the conference or a member requests redrawing, the buffer queue of performed drawing operations is traversed, XML encoding is performed, and a SIP INFO carrying drawing sequence is sent to the terminal. Thus, the UE performs the redrawing.

On the basis of the SIP audio/video conference, the embodiments of the present invention add an interaction function of the electronic whiteboard in the conference, so as to achieve a graphic drawing environment. First, a graphic conference function is implemented on the UE, so as to provide a graphic drawing environment. When the user performs the graphic drawing operation, the system adopts a graphic information capture and transmission policy based on the graphic information notation. The key feature information of graphics is captured to construct an XML packet, which is transmitted to the receiver through the extended SIP INFO. The receiver recovers the graphics according to the received graphic feature information, so as to reduce the transmission of the graphic data and decrease the network load. The embodiments of the present invention greatly enrich the multimedia communication content, achieve the sharing of voices and images of all the parities in the communication at a low traffic in real time, and realize the objective of extensive communication by using graphic text information in cooperative work of all parties in the communication.

In an embodiment, the present invention further provides a first device for implementing an electronic whiteboard in an audio/video conference. The first device may be an SIP AS or a functional entity in the SIP AS.

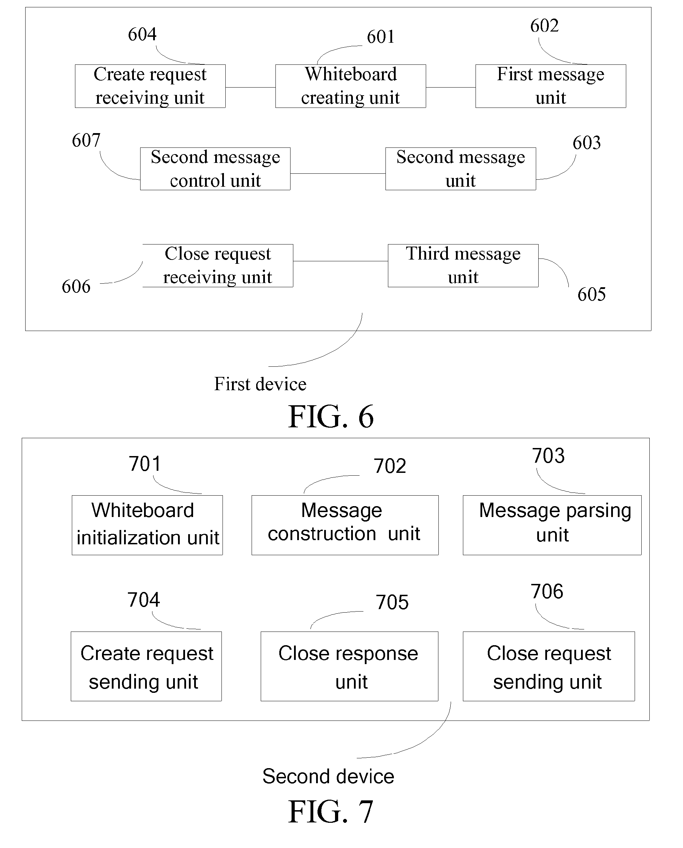

FIG. 6 is a schematic structural view of the first device, which includes a whiteboard creating unit 601, a first message unit 602, and a second message unit 603.

The whiteboard creating unit 601 is adapted to create an electronic whiteboard.

The first message unit 602 is adapted to send a first extended SIP INFO message to a first UE and a second UE in an SIP audio/video conference system, so as to instruct the first UE and the second UE to initialize the electronic whiteboard.

The second message unit 603 is adapted to receive a second extended SIP INFO message containing an operation instruction of the electronic whiteboard from the first UE, and send the second extended SIP INFO message to the second UE.

Preferably, the first device further includes a create request receiving unit 604.

The create request receiving unit 604 is adapted to receive a request for creating whiteboard sent by the first UE or the second UE, and start the whiteboard creating unit 601 after receiving the request for creating whiteboard.

In addition, the first device may further include a third message unit 605.

The third message unit 605 is adapted to send a third extended SIP INFO message to the first UE or the second UE, so as to instruct the UE to close the electronic whiteboard.

Moreover, the first device may further include a close request receiving unit 606.

The close request receiving unit 606 is adapted to receive a request for closing whiteboard sent from the first UE or the second UE, and start the third message unit 605 after receiving the request for closing whiteboard.

Preferably, the first device further includes a second message control unit 607.

The second message control unit 607 is adapted to control the second message unit 603 to process a plurality of second extended SIP INFO messages respectively according to a sequence of receiving the second extended SIP INFO messages.

Corresponding to the device as shown in FIG. 6, the present invention further provides a second device. The device may be a UE or a functional entity in the UE.

Referring to FIG. 7, the second device includes a whiteboard initialization unit 701, a message construction unit 702, and a message parsing unit 703.

The whiteboard initialization unit 701 is adapted to initialize an electronic whiteboard according to a first extended SIP INFO message sent from an SIP AS.

The message construction unit 702 is adapted to construct a second extended SIP INFO message from an operation instruction input from the electronic whiteboard by a user, and send the second extended SIP INFO message to other UEs in an SIP audio/video conference through the SIP AS.

The message parsing unit 703 is adapted to receive the second extended SIP INFO message of other UEs sent by the SIP AS, and parse and display the operation instruction.

Preferably, the second device further includes a create request sending unit 704.

The create request sending unit 704 is adapted to send a request for creating whiteboard to the SIP AS.

Preferably, the second device further includes a close response unit 705.

The close response unit 705 is adapted to close the electronic whiteboard after receiving the third extended SIP INFO message sent by the SIP AS.

Preferably, the second device further includes a close request sending unit 706.

The close request sending unit 706 is adapted to send a request for closing whiteboard to the SIP AS.

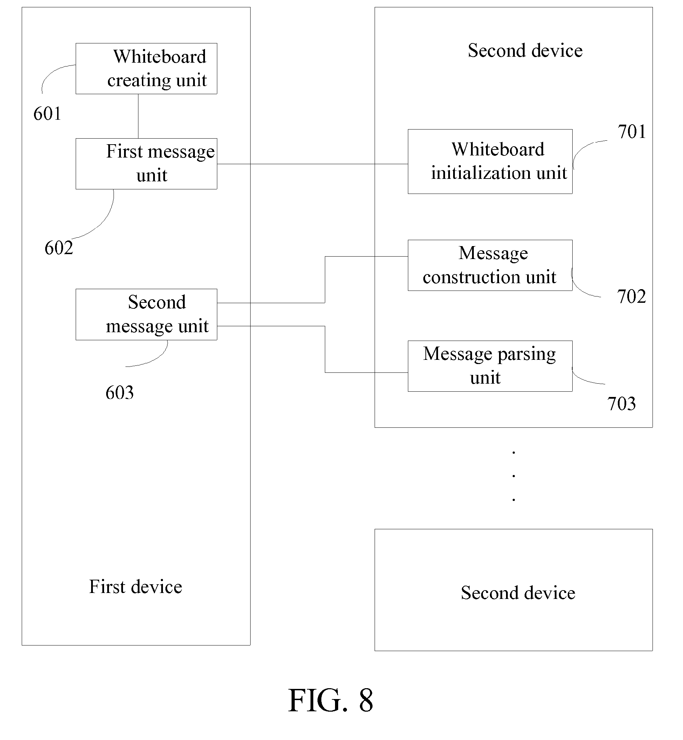

In addition, the present invention further provides a system for implementing an electronic whiteboard in an audio/video conference. FIG. 8 is a schematic view of the system, in which the first device is an SIP AS or an entity in the SIP AS, and the second device is a UE or an entity in the UE. The system can include a plurality of second devices. In FIG. 8 only one second device is detailed and the rest are not shown.

The SIP AS is adapted to create an electronic whiteboard, and send a first extended SIP INFO message to a first UE and a second UE in the SIP audio/video conference system, so as to instruct the first UE and the second UE to initialize the electronic whiteboard. Also, the SIP AS is adapted to receive a second extended SIP INFO message containing an operation instruction of the electronic whiteboard from the first UE, and send the second extended SIP INFO message to the second UE.

The first UE and the second UE are adapted to initialize the electronic whiteboard according to the first extended SIP INFO message sent from the SIP AS.

The first UE is adapted to construct the second extended SIP INFO message from the operation instruction input from the electronic whiteboard by the user, and send the second extended SIP INFO message to the second UE through the SIP AS.

The second UE is adapted to receive the second extended SIP INFO message sent by the SIP AS, and parse and display the operation instruction.

In more detail, the first device serving as the SIP AS includes a whiteboard creating unit 601, a first message unit 602, and a second message unit 603.

The whiteboard creating unit 601 is adapted to create an electronic whiteboard.

The first message unit 602 is adapted to send a first extended SIP INFO message to all UEs in an SIP audio/video conference system, so as to instruct all UEs to initialize the electronic whiteboard.

The second message unit 603 is adapted to receive a second extended SIP INFO message containing an operation instruction of the electronic whiteboard from a UE_i, and send the second extended SIP INFO message to UEs other than the UE_i in the SIP audio/video conference.

The second device serving as the first UE or the second UE includes a whiteboard initialization unit 701, a message construction unit 702, and a message parsing unit 703.

The whiteboard initialization unit 701 is adapted to initialize the electronic whiteboard according to the first extended SIP INFO message sent from the first message unit 602.

The message construction unit 702 is adapted to construct the second extended SIP INFO message from the operation instruction input from the electronic whiteboard by the user, and send the second extended SIP INFO message to other UEs in the SIP audio/video conference through the second message unit 603.

The message parsing unit 703 is adapted to receive the second extended SIP INFO message of other UEs sent by the second message unit 603, and parse and display the operation instruction.

Although the first device is not shown in FIG. 8, the first device may include a create request receiving unit 604, a third message unit 605, a close request receiving unit 606, and a second message control unit 607 as shown in FIG. 6.

The create request receiving unit 604 is adapted to receive a request for creating whiteboard sent from the UE, and start the whiteboard creating unit 601 after receiving the request for creating whiteboard.

The third message unit 605 is adapted to send a third extended SIP INFO message to each UE in the SIP audio/video conference to instruct the UE to close the electronic whiteboard.

The close request receiving unit 606 is adapted to receive a request for closing whiteboard sent from the UE, and start the third message unit 605 after receiving the request for closing whiteboard.

The second message control unit 607 is adapted to control the second message unit 603 to process a plurality of second extended SIP INFO messages respectively according to a sequence of receiving the second extended SIP INFO messages.

Although the second device is not shown in FIG. 8, the second device may further include a create request sending unit 704, a close response unit 705, and a close request sending unit 706 as shown in FIG. 7.

The create request sending unit 704 is adapted to send a request for creating whiteboard to the SIP AS.

The close response unit 705 is adapted to close the electronic whiteboard after receiving the third extended SIP INFO message sent by the SIP AS.

The close request sending unit 706 is adapted to send the request for closing whiteboard to the SIP AS.

The details of implementing the devices and systems provided in the embodiment of the present invention are as described in the method embodiments, the description of which is omitted here.

Therefore, in the embodiments of the present invention, on the basis of the process of the SIP audio/video conference, whiteboard operation instructions are carried between the UE and the SIP AS through the extended SIP INFO messages, so as to implement the function of integrating the electronic whiteboard in the SIP audio/video conference. Thus, the present invention greatly enriches the content of the SIP audio/video conference, thereby satisfying the demands of users.

Persons of ordinary skill in the art should understand that the all or a part of the steps of the method according to the embodiments may be implemented by a program instructing relevant hardware. The program may be stored in a computer readable storage medium. The storage medium may be a read only memory (ROM), a random access memory (RAM), a magnetic disk, or an optical disk.

The foregoing are only preferred embodiments of the present invention. It should be noted that persons of ordinary skill in the art can make several improvements and modifications without departing from the principles of the present invention. The improvements and modifications also fall into the protection scope of the present invention.

## Claims

1. A method for implementing an electronic whiteboard in an audio/video conference, comprising:
creating an electronic whiteboard, and sending a first extended message to a first user equipment (UE) and a second UE in a Session Initiation Protocol (SIP) audio/video conference, so as to instruct the first UE and the second UE to initialize the electronic whiteboard;
receiving a second extended message sent by the first UE, wherein the second extended message contains an operation instruction of the electronic whiteboard; and
sending the second extended message to the second UE.

2. The method according to claim 1, wherein before the creating the electronic whiteboard, the method further comprises:
receiving a request for creating whiteboard sent from the first UE or the second UE.

3. The method according to claim 1, wherein after the sending the second extended message to the second UE, the method further comprises:
sending a third extended message to the first UE and the second UE in the SIP audio/video conference, so as to instruct the first UE and the second UE to close the electronic whiteboard.

4. The method according to claim 3, wherein after the sending the second extended message to the second UE, the method further comprises:
receiving a request for closing whiteboard sent from the first UE or the second UE.

5. The method according to claim 2 or 4, wherein the request for creating whiteboard or the request for closing whiteboard is carried in the extended message.

6. The method according to claim 2 or 4, wherein
the first UE and/or the second UE has the same authority to initiate the request for creating whiteboard or the request for closing whiteboard.

7. The method according to claim 1, 2, 3 or 4, wherein after the sending the second extended message to the second UE, the method further comprises:
parsing, by the second UE, the second extended message, and recovering and displaying the operation instruction.

8. The method according to claim 1, 2, 3 or 4, wherein the containing the operation instruction of the electronic whiteboard in the second extended message comprises:
construct, by the first UE, an Extensible Markup Language (XML) packet from the operation instruction, and adding the XML packet in the second extended message.

9. The method according to claim 8, wherein after the sending the second extended message to the second UE, the method further comprises:
after receiving the second extended message, unpacking, by the second UE, the XML packet, and performing an operation of sharing the operation instruction.

10. A device for implementing an electronic whiteboard in an audio/video conference, comprising:
a whiteboard creating unit, adapted to create the electronic whiteboard;
a first message unit, adapted to send a first extended message to a first user equipment (UE) and a second UE in a Session Initiation Protocol (SIP) audio/video conference system, so as to instruct the first UE and the second UE to initialize the electronic whiteboard; and
a second message unit, adapted to receive a second extended message containing an operation instruction of the electronic whiteboard from the first UE, and send the second extended message to the second UE.

11. The device according to claim 10, further comprising:
a create request receiving unit, adapted to receive a request for creating whiteboard sent from the first UE or the second UE send, and start the whiteboard creating unit after receiving the request for creating whiteboard.

12. The device according to claim 10, further comprising:
a third message unit, adapted to send a third extended message to the first UE and/or the second UE, so as to instruct the first UE and/or the second UE to close the electronic whiteboard.

13. The device according to claim 10, further comprising:
a close request receiving unit, adapted to receive a request for closing whiteboard sent from the first UE and/or second UE, and start the third message unit after receiving the request for closing whiteboard.

14. The device according to claim 10, 11, 12 or 13, further comprising:
a second message control unit, adapted to control the second message unit to process a plurality of second extended messages respectively according to a sequence of receiving the second extended messages.

15. A device for implementing an electronic whiteboard in an audio/video conference, comprising:
a whiteboard initialization unit, adapted to initialize the electronic whiteboard according to a first extended message received from a Session Initiation Protocol (SIP) server; and
a message construction unit, adapted to generate a second extended message according to an operation instruction input through the electronic whiteboard by a user, and send the second extended message to user equipments (UEs) in the SIP audio/video conference through the server.

16. The device according to claim 15, further comprising:
a message parsing unit, adapted to receive an extended message of other UEs sent by the SIP server, and parse and display the operation instruction in the extended message.

17. The device according to claim 15 or 16, further comprising:
a create request sending unit, adapted to send a request for creating whiteboard to the SIP server.

18. The device according to claim 15 or 16, further comprising:
a close response unit, adapted to close the electronic whiteboard after receiving a third extended message sent by the SIP server.

19. The device according to claim 18, further comprising:
a close request sending unit, adapted to send a request for closing whiteboard to the SIP server.

20. A system for implementing an electronic whiteboard in an audio/video conference, comprising a Session Initiation Protocol (SIP) server connected to a first user equipment (UE) and a second UE, wherein
the SIP server is adapted to create the electronic whiteboard, send a first extended message to the first UE and the second UE in the audio/video conference system so as to instruct the first UE and the second UE to initialize the electronic whiteboard, receive a second extended message containing an operation instruction of the electronic whiteboard from the first UE, and send the second extended message to the second UE; and
the first UE and the second UE are adapted to initialize the electronic whiteboard according to the first extended message sent by the SIP server, the first UE is adapted to construct the second extended message from the operation instruction input through the electronic whiteboard by a user, and send the second extended message to the second UE through the SIP server, and the second UE is adapted to receive the second extended message sent from the SIP server, and parse and display the operation instruction in the second extended message.
